# EUROPEAN PATENT APPLICATION

(11) **EP 1 265 211 A2**
(43) Date of publication of application: **11.12.2002**
(21) Application number: 02012202.4
(22) Date of filing: 03.06.2002
(51) Int. Cl.: G09G 3/20, G06F 1/00, G09G 5/00

(54) **Display device, program therefor, and program for components of a system including the same**

(30) Priority: 04.06.2001 JP 2001168400
(71) Applicant: EIZO NANAO CORPORATION, Ishikawa 924-8566 (JP)
(72) Inventor: Yonemitsu, Junro, Matto, Ishikawa 924-8566 (JP); Deyama, Atsuyoshi, Matto, Ishikawa 924-8566 (JP); Ikawa, Nanae, Matto, Ishikawa 924-8566 (JP); Hiraka, Tadahiko, Matto, Ishikawa 924-8566 (JP)
(74) Representative: Leson, Thomas Johannes Alois, Dipl.-Ing.

(57) **Abstract**

The display device of the invention for displaying images on an LCD based on output signals from a client computer includes: a communication interface for exchanging information on a burglarproof function with the client computer; a memory for storing the information on the burglarproof function received via the communication interface; and a controller. The controller has the functions of: putting the display function of the LCD in an improper state after a lapse of a predetermine time when the information indicates that the burglarproof function is in the "ON" state; maintaining the display function of the LCD proper even in the "ON" state of the burglarproof function when the client computer receives a predetermined message for temporarily releasing the burglarproof function; and maintaining the display function of the LCD proper when the information indicates that the burglarproof function is in the "OFF" state.

## Description

### BACKGROUND OF THE INVENTION

### (1) Field of the Invention

The present invention relates to a display device having a CRT, a liquid crystal panel, a plasma display panel or the like as a display means. More particularly, the present invention relates to burglarproof measures for a display device connected to a client computer in a network environment.

### (2) Description of the Related Art

Display devices are connected to client computers on a network in a company or the like to perform display processing in response to user operations and the like on the client computers.

Conventionally, for prevention of a burglar of such a display device, the display device is physically bound to a desk or the like on which the display device is placed with a chain or a wire. Otherwise, a burglarproof function incorporated in the display device itself is used. For example, the display function is locked by use of a control key on a keyboard of the client computer.

The conventional measures described above have the following problems.

Physical binding of a display device with a chain or a wire leads to a heavy load on facility management in a network environment in which a number of client computers are arranged. Locking of the display function can be easily released by a user who is familiar with the operation of the display device.

### SUMMARY OF THE INVENTION

The object of the present invention is to provide a display device capable of reducing the load on the facility management and improving the burglarproof effect, in which improper display is presented on the screen in case that the display device is removed from a network environment to which the display device originally belongs, a program for such a display device, and a program for components of a system including the display device.

To achieve the above object, the present invention has a configuration described below.

The present invention is directed to a display device for displaying images on display means based on output signals from a client computer. The device includes:
a communication interface for exchanging information on a burglarproof function with the client computer;
memory means for storing the information on the burglarproof function received via the communication interface; and
control means having functions of: putting a display function of the display means in an improper state after a lapse of a predetermined time when it is confirmed that the information on the burglarproof function indicates the burglarproof function is in the "ON" state via the communication interface or the memory means; maintaining the display function of the display means proper even in the "ON" state of the burglarproof function when the client computer receives a predetermined message periodically issued by a server computer connected via a network and the display device receives information for temporarily releasing the burglarproof function from the client computer via the communication interface; and maintaining the display function of the display means proper when it is confirmed that the information on the burglarproof function indicates the burglarproof function is in the "OFF" state via the communication interface or the memory means.

As long as the display device is in the proper state of being connected to the client computer on the network, the control means maintains the display function proper to enable normal display processing even when the burglarproof function is set to "ON" because the client computer receives information for temporarily releasing the burglarproof function in the form of the predetermined message. When the burglarproof function is set to "OFF", the display function is maintained proper in any environment.

In case that the display device is connected to another network or used in a stand-alone environment while the burglarproof function is set to "ON", the control means puts the display function in the improper state to disable normal use of the display device. Therefore, if it is made known to public that the display device is provided with such a function, this will contribute to reduction in load on the facility management and also to improvement in the burglarproof effect of the display device.

Note that the server computer and the client computer are not necessarily fixed types in the network form in the strict meaning, but may be in a peer-to-peer relationship in the network form, or may be in the server-client relationship in an application software program currently executed by the computer.

Preferably, the control means turns off the power supply after a lapse of a predetermined time to put the display function in the improper state. Thus, the effect of the invention can be produced with a comparatively simple configuration.

Preferably, to put the display function in the improper state, the control means displays a message notifying that the power supply will be turned off after a lapse of a predetermined time on the display means together with display of the elapsed time, and turns off the power supply at the lapse of the predetermined time. This configuration makes it possible for users to know the time period during which proper display is obtained. Thus, in the case that a mere irregular event, not a burglar, occurs on the network or in the server computer, the user can use the display device for the predetermined time. Accordingly, a problem that the display device is made utterly unusable due to troubles other than burglary is prevented.

Preferably, the memory means further includes a region for storing asset management information, and the region is readable/writable only by the server computer. The asset management information includes, for example, asset management numbers, owing segments, locations and user names of the display devices on the network. This configuration makes it possible to easily manage the display devices on the network by one operation. In addition, unlike a management label stuck on the display device, data tampering is not easy, and thus further enhancement of the burglarproof effect is expected.

### BRIEF DESCRIPTION OF DRAWINGS

For the purpose of illustrating the invention, there are shown in the drawings several forms which are presently preferred, it being understood, however, that the invention is not limited to the precise arrangement and instrumentalities shown.
FIG. 1 is a block diagram showing a schematic arrangement of a display device and a client computer in a system of an embodiment of the invention;
FIG. 2 is a diagrammatic illustration of the system;
FIG. 3 is a flowchart of initialization of the display device;
FIG. 4 is a flowchart of timer interrupt;
FIG. 5 is a flowchart of main processing loop; and
FIG. 6 is a flowchart of communications with the client computer.

### DESCRIPTION OF PREFERRED EMBODIMENT

Hereinafter, a preferred embodiment of the invention will be described in detail with reference to relevant drawings.

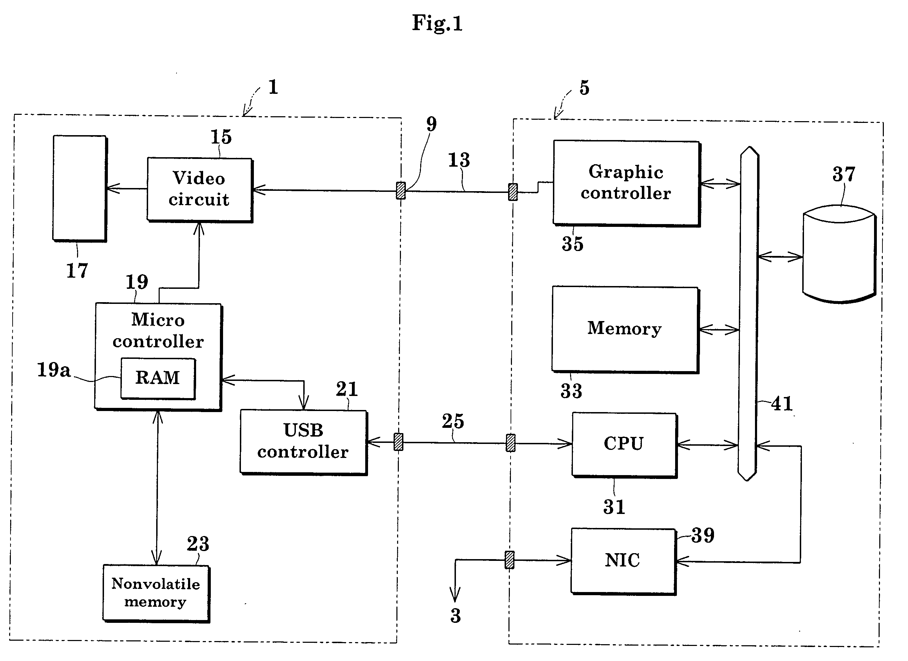

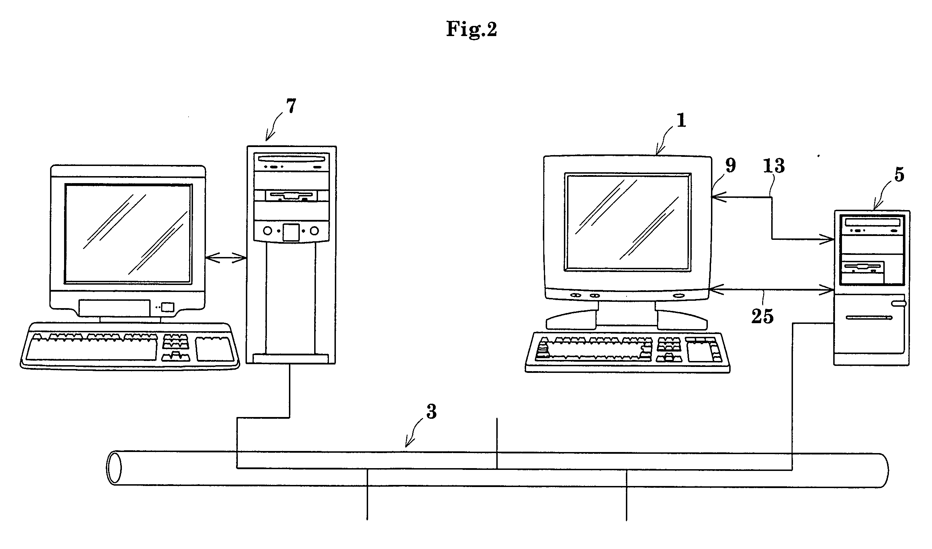

FIGS. 1 and 2 show an embodiment of the invention, in which FIG. 1 is a block diagram showing a schematic arrangement of a display device and a client computer in a system of the embodiment, and FIG. 2 is a diagrammatic illustration of the system.

A display device 1 is connected to a client computer 5 which is on a network 3 (Ethernet, for example), and the client computer 5 is connected to a server computer 7 via the network 3.

The display device 1 includes an input terminal 9, which is connected to the client computer 5 via a video cable 13. Inside the display device 1, the input terminal 9 is connected to a video circuit 15, and the video circuit 15 supplies signals to an LCD 17 as the display means of the invention, to enable display of images.

The video circuit 15 is controlled by a microcontroller 19 having a RAM 19a. A USB controller 21 and a nonvolatile memory 23 are connected to the microcontroller 19. When the display device 1 is powered off, the contents of the RAM 19a are no more maintained while the contents of the nonvolatile memory 23 are maintained.

The microcontroller 19 corresponds to the control means of the invention, and the RAM 19a and the nonvolatile memory 23 correspond to the memory means of the invention.

The USB controller 21, which corresponds to the communication interface of the invention, communicates with the client computer 5 via a USB cable 25 for exchanging information on a burglarproof function. In this embodiment, the information on the burglarproof function includes a "burglarproof function ON instruction" for enabling the burglarproof function, a "burglarproof function OFF instruction" for disabling the burglarproof function, and a "burglarproof function temporarily releasing instruction" for temporarily disabling the burglarproof function.

As the communication interface, a serial interface such as RS-232C may be used in place of the USB controller 21.

The programmed operation of the microcontroller 19, which constitutes main part of the invention, is as follows, details of which will be described later. When the microcontroller 19 receives the "burglarproof function ON instruction" via the USB controller 21, it writes the information in the RAM 19a and the nonvolatile memory 23 to enable the burglarproof function. When the microcontroller 19 receives the "burglarproof function OFF instruction", it writes the information in the RAM 19a and the nonvolatile memory 23 to disable the burglarproof function. When the microcontroller 19 receives the "burglarproof function temporarily releasing instruction", it writes the information for temporality releasing the burglarproof function only in the RAM 19a of the microcontroller 19.

The client computer 5 includes a CPU 31, a memory 33, a graphic controller 35, a hard disk 37 and a network interface card (NIC) 39, which are all connected with one another via a bus 41. The NIC 39 is connected to the network 3.

In the client computer 5 with the arrangement described above, the CPU 31 reads an operating system from the hard disk 37 into the memory 33 and executes the operating system to perform prescribed operation. The CPU 31 further executes a program specified by the user to perform user-specified operation. In addition, a program on the burglarproof function automatically stays resident in the memory 33 and monitors whether or not any of the instructions described above has been received from the server computer 7 connected via the network 3.

When receiving any of the instructions on the burglarproof function, the client computer 5 transfers the instruction to the display device 1. The user of the client computer 5 is kept away from involvement in this burglarproof function. As for the "burglarproof function temporarily releasing instruction", a broadcast message periodically issued by the server computer 7 on the network 3 is used as a substitute for this instruction. Therefore, when receiving a broadcast message, the client computer 5 sends the "burglarproof function temporarily releasing instruction" to the display device 1.

The broadcast message described above corresponds to the predetermined message and the periodical message of the invention.

The server computer 7, which is a computer used by the system manager, can specify the display device 1 connected to the client computer 5 on the network 3 to switch ON/OFF the burglarproof function for the display device 1. In other words, the server computer 7 sends the "burglarproof function ON instruction" or the "burglarproof function OFF instruction" to the client computer 5. In place of the "burglarproof function temporarily releasing instruction", the server computer 7 issues the broadcast message every minute to make its presence known on the network 3, as described above.

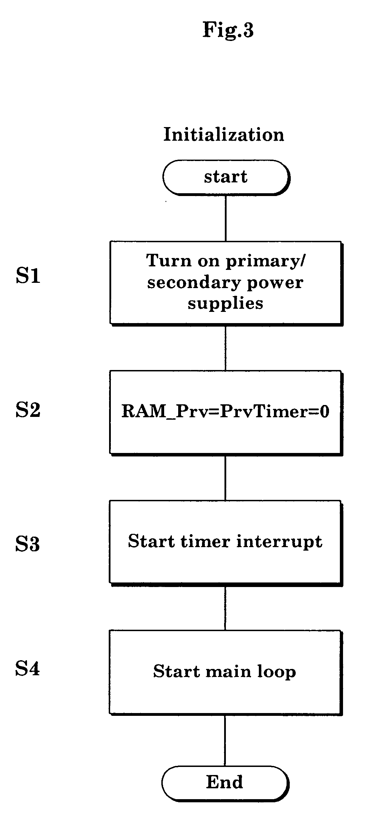

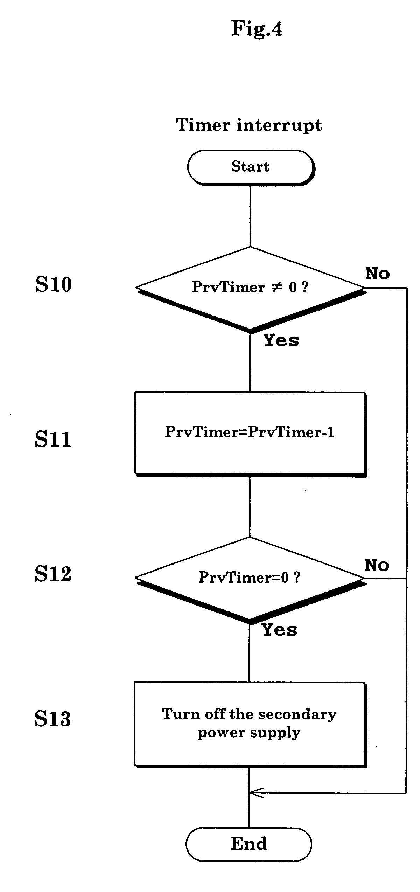

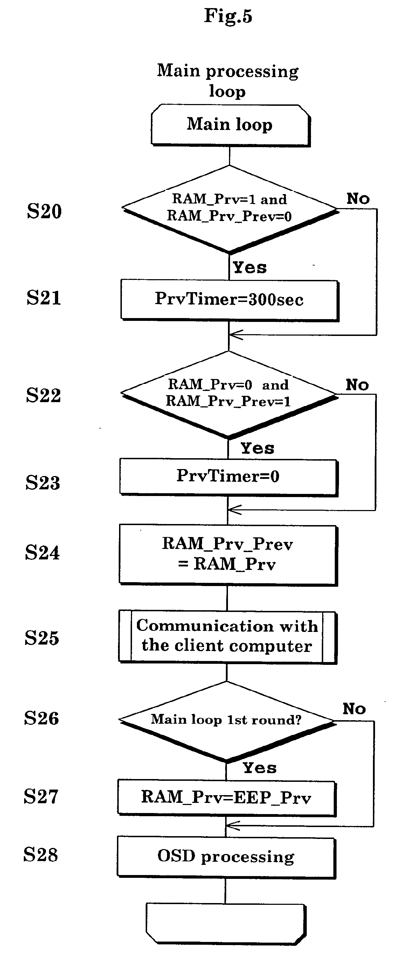

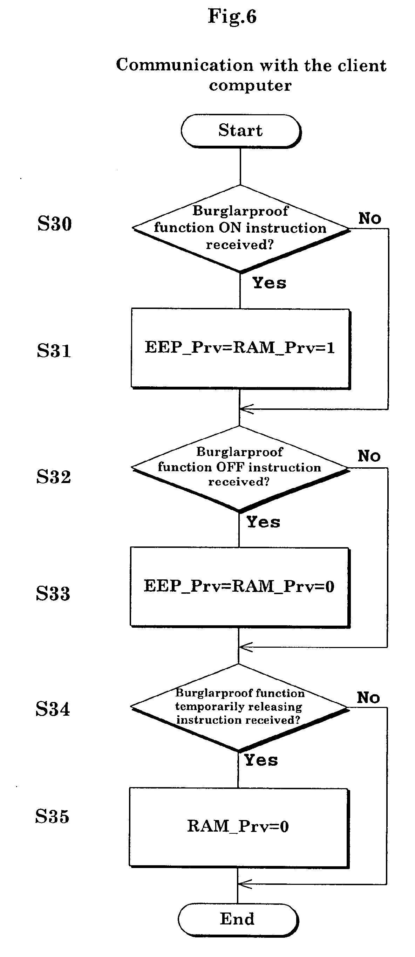

The operation of the system including the display device 1 described above will be described with reference to the flowcharts of FIGS. 3 to 6. FIG. 3 is a flowchart of initialization of the display device, FIG. 4 is a flowchart of timer interrupt, FIG. 5 is a flowchart of main processing loop, and FIG. 6 is a flowchart of communications with the client computer.

First, the entire operation will be described step by step.

### A. Initialization

In step S1, primary/secondary power supplies (not shown) of the display device 1 are turned on to start the operation of the display device 1.

In step S2, a variable RAM_Prv indicating the ON/OFF state of the burglarproof function and a variable PrvTimer indicating the timer value for timer processing, both stored in the RAM 19a of the microcontroller 19, are initialized to "0".

In step S3, interrupt for timer operation is started. This timer interrupt is executed periodically, for example, every second, even during execution of main processing loop described below.

### B. Timer interrupt

In step S10, it is determined whether or not PrvTimer is not "0". When PrvTimer is not "0", that is, time is not yet up, a constant number ("1" in this embodiment) is subtracted from PrvTimer in step S11. When PrvTimer is "0", that is, time is up, the timer processing is terminated, and the process returns to step S4 in FIG. 3.

In step S12, it is determined again whether or not PrvTimer is "0". When PrvTimer is "0", that is, time is up, the secondary power supply is turned off in step S13, whereby the display on the LCD 17 of the display device 1 is halted. When PrvTimer is not "0", that is, time is not yet up, the process returns to step S4 in FIG. 3.

In step S4, the main processing loop shown in FIG. 5 is started.

### C. Main processing loop

In step S20, it is determined whether or not RAM_Prv in the RAM 19a is "1", indicating that the burglarproof function is "ON", and RAM_Prv in the previous loop, RAM_Prv_Prev, is "0", indicating that the burglarproof function is "OFF". In other words, it is determined whether or not the "burglarproof function ON instruction" has been received (step S31 in FIG. 6, described later) while in the previous loop the "burglarproof function OFF instruction" was received (step S33 in FIG. 6, described later). In short, whether or not the burglarproof function has shifted from OFF to ON is determined.

When it is determined that the burglarproof function has shifted from OFF to ON in step S20, PrvTimer is set at a specified value in step S21. In this embodiment, PrvTimer is set at 300 seconds or five minutes. By this setting, during the timer interrupt in FIG. 4, the timer is counted down in step S11, and the secondary power supply is turned off in step S13 when PrvTimer becomes "0".

In step S22, it is determined whether or not RAM_Prv in the RAM 19a is "0", indicating that the burglarproof function is "OFF", and RAM_Prv in the previous loop, RAM_Prv_Prev, is "1", indicating that the burglarproof function is "ON". In other words, it is determined whether or not the "burglarproof function OFF instruction" has been received (step S33 in FIG. 6, described later) while in the previous loop the "burglarproof function ON instruction" was received (step S30 in FIG. 6, described later). In short, whether or not the burglarproof function has shifted from ON to OFF is determined.

When it is determined that the burglarproof function has shifted from ON to OFF in step S22, PrvTimer is set at the specified value "0" in step S23. By this setting, during the timer interrupt in FIG. 4, it is determined that PrvTimer is "0" in step S10 and the timer processing is terminated, and therefore, no timer countdown is performed.

In step S24, RAM_Prv is set as RAM_Prv_Prev. This means that the current state of the burglarproof function in the RAM 19a is set as the variable in the previous loop. Thereafter, the process proceeds to step S25 for communication with the client computer.

### D. Communication with client computer

In step S30, it is determined whether or not the "burglarproof function ON instruction" has been received from the client computer 5.

When it is determined that the instruction has been received, both a variable EEP_Prv and the variable RAM_Prv are set at "1" in step S31. EEP_Prv indicates the ON/OFF state of the burglarproof function stored in the nonvolatile memory 23. In other words, the receipt of the "burglarproof function ON instruction" is stored both in the RAM 19a and the nonvolatile memory 23.

In step S32, it is determined whether or not the "burglarproof function OFF instruction" has been received from the client computer 5.

When it is determined that the instruction has been received, both EEP_Prv and RAM_Prv are set at "0" in step S33. In other words, the receipt of the "burglarproof function OFF instruction" is stored both in the RAM 19a and the nonvolatile memory 23.

In step S34, it is determined whether or not the "burglarproof function temporarily releasing instruction" has been received from the client computer 5.

When it is determined that the instruction has been received, only RAM_Prv is set at "0" in step S35. In other words, the receipt of the "burglarproof function temporarily releasing instruction" is stored only in the RAM 19a, not in the nonvolatile memory 23, so that this will be erased when the display device 1 is powered off.

Upon completion of the communication processing described above, the process returns to the main processing loop in FIG. 5, and in step S26, it is determined whether or not this main loop is the first round. The process proceeds to step S27 only when the main loop is the first round. In step S27, EEP_Prv stored in the nonvolatile memory 23 is set as RAM_Prv stored in the RAM 19a.

In other words, the ON/OFF state of the burglarproof function stored in the nonvolatile memory 23 is read and set in the RAM 19a only when the main processing loop is executed first time after the power-on of the display device 1, so that the state of the burglarproof function before the power-off of the display device 1 is resumed.

In step S28, on-screen display (OSD) processing is performed to display an OSD image on the LCD 17 of the display device 1. For example, the current state of the burglarproof function may be displayed, or a message notifying of power shutdown may be displayed on the LCD 17 together with the remaining time before shutdown, based on the value of PrvTimer.

Hereinafter, the cases that the manager of the server computer 7 sets the burglarproof function to "ON" and to "OFF" for the display device 1 will be described, respectively.

### (1) Burglarproof function ON

The case that the manager of the server computer 7 sets the burglarproof function to "ON" for the display device 1 is as follows. During the communication with the client computer 5, the "ON" state of the burglarproof function is set both for EEP_Prv and RAM_Prv (step S31 in FIG. 6). In this state, as long as the display device is in connection with the network 3, the burglarproof function is temporarily released (step S35 in FIG. 6) in response to the broadcast message, and the timer value PrvTimer is set at "0" (step S23 in FIG. 5). Therefore, the secondary power supply will not be turned off during the every-second timer interrupt ("No" in step S10 in FIG. 4).

In the state described above, there may occur an event that the display device 1 is disconnected from the client computer 5 and connected to a computer on a network different from the originally-connected network or to a stand-alone computer without network connection (hereinafter, this state of the display device is called a "burgled state"). In this event, the "burglarproof temporarily releasing instruction" does not reach the display device 1 even when the client computer 5 receives a broadcast message from the network 3.

In the above state, when the display device 1 is powered on, the contents in the nonvolatile memory 23 are set in the RAM 19a (step S27 in FIG. 5). More specifically, the "ON" state of the burglarproof function is resumed and PrvTimer is set at five minutes (step S21 in FIG. 5). Therefore, PrvTimer is counted down and once it becomes "0", the secondary power supply of the display device 1 is turned off (step S13 in FIG. 4).

### (2) Burglarproof function OFF

The case that the manager of the server computer 7 sets the burglarproof function to "OFF" for the display device 1 is as follows. During the communication with the client computer 5, the "OFF' state of the burglarproof function is set both for EEP_Prv and RAM_Prv (step S33 in FIG. 6), and the timer value PrvTimer is set at "0" (step S23 in FIG. 5). Therefore, the secondary power supply will not be turned off during the every-second timer interrupt ("No" in step S10 in FIG. 4).

In an event that the display device 1 is put in the burgled state from the state described above, the system operates as follows.

When the display device 1 is powered on, the contents in the nonvolatile memory 23 are set in the RAM 19a (step S27 in FIG. 5). More specifically, the "OFF" state of the burglarproof function is resumed and PrvTimer is set at "0" (step S23 in FIG. 5). Therefore, the secondary power supply will not be turned off during the every-second timer interrupt ("No" in step S10 in FIG. 4).

As described above, in this embodiment, as long as the display device 1 is properly connected to the client computer 5 on the network 3, the microcontroller 19 maintains the display function proper to enable normal display processing even in the "ON" state of the burglarproof function. In the "OFF" state of the burglarproof function, the display function is maintained proper in any environment.

When the display device 1 is connected to another network or used in the stand-alone environment in the "ON" state of the burglarproof function, however, the microcontroller 19 turns off the secondary power supply to disable normal use of the display device 1. Therefore, it may advantageously be made known to public that the display device 1 has the function of disabling continuous operation when the display device 1 is disconnected from the system, including the network 3, the server computer 7 and the client computer 5, to which the display device 1 originally belongs. This will contribute to reduction in load on the facility management and also improvement in burglarproof effect.

The present invention is not limited to the embodiment described above, but may be modified as follows.
(1) A region for storing asset management information may be secured in the nonvolatile memory 23, and may be readable/writable only by the server computer 7. The asset management information may include the model name, serial number, manufacture date, asset management number, owing segment, location and user name of the display device 1, for example.
   Management of the asset management information by the server computer 7 provides another effect of permitting easy management of the display device 1 on the network 3 by one operation. In addition, unlike a management label physically stuck on the display device 1, data tampering is not easy, and thus further enhancement of the burglarproof effect is expected.
(2) To put the display function in the improper state, not only the secondary power supply but also the primary power supply may be turned off. Alternatively, in place of turning off the power supply, images, which may interfere with the operation, may be displayed on the LCD 17 by OSD processing. Otherwise, the contrast and brightness of the images displayed may be set improper for the operation.
(3) In place of the broadcast message, a specific program periodically executed by the server computer 7 may be used as the predetermined message and the periodical message for temporarily releasing the burglarproof function. For example, a program for allowing the server computer 7 to send the "burglarproof function temporarily releasing instruction" to all the client computers on the network 3 at predetermined intervals may be used.
(4) In place of the USB controller 21, the graphic controller 35 and the video cable 13 may be used as the communication interface by multiplexing the information on the burglarproof function, for example.

The present invention may be embodied in other specific forms without departing from the spirit or essential attributes thereof and, accordingly, reference should be made to the appended claims, rather than to the foregoing specification, as indicating the scope of the invention.

The display device of the invention for displaying images on an LCD based on output signals from a client computer includes: a communication interface for exchanging information on a burglarproof function with the client computer; a memory for storing the information on the burglarproof function received via the communication interface; and a controller. The controller has the functions of: putting the display function of the LCD in an improper state after a lapse of a predetermine time when the information indicates that the burglarproof function is in the "ON" state; maintaining the display function of the LCD proper even in the "ON" state of the burglarproof function when the client computer receives a predetermined message for temporarily releasing the burglarproof function; and maintaining the display function of the LCD proper when the information indicates that the burglarproof function is in the "OFF" state.

## Claims

1. A display device for displaying images on display means based on output signals from a client computer, comprising:
a communication interface for exchanging information on a burglarproof function with the client computer;
memory means for storing the information on the burglarproof function received via the communication interface; and
control means having functions of: putting a display function of the display means in an improper state after a lapse of a predetermined time when it is confirmed that the information on the burglarproof function indicates the burglarproof function is in the "ON" state via the communication interface or the memory means; maintaining the display function of the display means proper even in the "ON" state of the burglarproof function when the client computer receives a predetermined message periodically issued by a server computer connected via a network and the display device receives information for temporarily releasing the burglarproof function from the client computer via the communication interface; and maintaining the display function of the display means proper when it is confirmed that the information on the burglarproof function indicates the burglarproof function is in the "OFF" state via the communication interface or the memory means.

2. The device according to claim 1, wherein the control means turns off the power after a lapse of a predetermined time to put the display function in the improper state.

3. The device according to claim 1, wherein, to put the display function in the improper state, the control means displays a message notifying that the power will be turned off after a lapse of a predetermined time on the display means together with display of the elapsed time, and turns off the power at the lapse of the predetermined time.

4. The device according to claim 1, wherein the memory means further includes a region for storing asset management information, and the region is readable/writable only by the server computer.

5. The device according to claim 2, wherein the memory means further includes a region for storing asset management information, and the region is readable/writable only by the server computer.

6. The device according to claim 3, wherein the memory means further includes a region for storing asset management information, and the region is readable/writable only by the server computer.

7. A program for a display device for displaying images on display means based on output signals from a client computer, the program comprising the steps of:
putting a display function of the display means in an improper state after a lapse of a predetermined time when it is confirmed that information on a burglarproof function indicates the burglarproof function is in the "ON" state via communication interface for exchanging the information on the burglarproof function or memory means for storing the information on the burglarproof function received from the communication interface;
maintaining the display function of the display means proper even in the "ON" state of the burglarproof function when the client computer receives a periodical message periodically issued by a server computer connected via a network and the display device receives information for temporarily releasing the burglarproof function from the client computer via the communication interface; and
maintaining the display function of the display means proper when it is confirmed that the information on the burglarproof function indicates the burglarproof function is in the "OFF" state via the communication interface or the memory means.

8. The program according to claim 7, wherein the power is turned off after a lapse of a predetermined time to put the display function in the improper state.

9. The program according to claim 8, wherein, to put the display function in the improper state, a message notifying that the power will be turned off after a lapse of a predetermined time is displayed on the display means together with display of the elapsed time, and the power is turned off at the lapse of the predetermined time.

10. A program for components of a system including a server computer, a client computer connected to the server computer via a network, and a display device for displaying images on display means based on output signals from the client computer, the program comprising the steps for the server computer of:
sending either "burglarproof function ON instruction" for enabling a burglarproof function or "burglarproof function OFF instruction" for disabling the burglarproof function to the client computer as information on the burglarproof function based on an instruction of an operator; and
sending a periodical message to the network at predetermined intervals,
the program also comprising the steps for the client computer of:
sending "burglarproof function ON instruction" to the display device via a communication interface for exchanging the information on the burglarproof function when the client computer receives the "burglarproof function ON instruction" from the server computer;
sending "burglarproof function OFF instruction" to the display device via the communication interface when the client computer receives the "burglarproof function OFF instruction" from the server computer; and
sending information for temporarily releasing the burglarproof function to the display device via the communication interface when the client computer receives the periodical message from the server computer, and
the program further comprising the steps for the display device of:
putting a display function of the display means in an improper state after a lapse of a predetermined time when it is confirmed that the information on the burglarproof function indicates the burglarproof function is in the "ON" state via the communication interface or memory means for storing the information on the burglarproof function received from the communication interface;
maintaining the display function of the display means proper even in the "ON" state of the burglarproof function when the client computer receives the periodical message periodically issued by the server computer connected via the network and the display device receives information for temporarily releasing the burglarproof function from the client computer via the communication interface; and
maintaining the display function of the display means proper when it is confirmed that the information on the burglarproof function indicates the burglarproof function is in the "OFF" state via the communication interface or the memory means.
